# EUROPEAN PATENT APPLICATION

(11) **EP 1 384 972 A1**
(43) Date of publication of application: **28.01.2004**
(21) Application number: 02090263.1
(22) Date of filing: 17.07.2002
(51) Int. Cl.: G01B 9/04, G02B 21/26, G02B 21/36

(54) **Microscope with rotary sample stage and integrated display screen**

(71) Applicant: Hung Fu Group of Companies, Taipei (TW)
(72) Inventor: Chiang, Chin Chih, Taipei (TW)
(74) Representative: Hengelhaupt, Jürgen D., Dipl.-Ing.

(57) **Abstract**

Disclosed herein is an innovative micrometric measuring instrument which comprises a base, a flat entrainer, a microscope and a screen firmly engaged one another in a clustered construction instead of being constructed loosely and separately as that is usually seen in a conventional product. By means of up and down displacement of the microscope and 360° horizontally rotatable loading disc aided by two laser guides, the focusing of the objet can be rapidly carried out and the measurement is then worked out efficiently keeping upgraded working quality.

## Description

### BACKGROUND OF THE INVENTION

### 1. Field of the invention

The present invention relates to an innovative micrometric measuring instrument, and more particularly, to a micrometric measuring instrument consists of a base, a flat entrainer, a microscope, and a screen with its frame, wherein the flat entrainer is shiftable in two dimensional directions and entrains a 360° rotatable loading board for loading an object, and the microscope set under the screen frame and above the object is displaceable up and down so as to aim and focus the object accurately for performing precise measurement.

### 2. Description of the prior art

The measurement of hardness, strength, size, weight, and quality of an object involves many various measuring instruments. Degree of measuring accuracy has an innegligible influence to security and reliability of the product, which comprises the said object as a component. This is the reason why that manufacturers of the measuring devices endeavor to upgrade their products. A micrometric measuring instrument for taking measure of tiny-sized objects, such as pinout terminals for integrated circuits and fine electronic components, usually calls for an accompanied high performance microscope and a two dimensionally (X and Y) shiftable flat panel for entraining an object so as to aim and focus the object downward with the microscope and display the measured data on a display dev ice interconnected beside the microscope.

However, the measuring instrument in which the microscope and the display device is separately constructed as such is by no means able to operate alertly owing to the fact that the object on the flat panel can only be adjusted its position in X and Y directions, the object has to be manually adjusted its position from time to time in case more precise observation from various angles is required. With such treatment, the initially well-focused object may be deviated from its position and requires a tedious procedure for readjustment. Besides, to set the object at the right position on the flat panel by estimating only with the naked eyes at the beginning needs a time consuming try and error procedure therefore the working efficiency is lowered. Besides, the interconnection wires between the microscope and the screen often become an obstacle to the operator's free movements.

Aiming at the above-depicted shortcomings, the present invention is to propose a newly developed innovative micrometric measuring instrument capable of operating satisfactorily with desired instrumental accuracy.

### SUMMARY OF THE INVENTION

It is an object of the present invention to provide an innovative micrometric measuring instrument, which is able to rotate and adjust the position of an object in two-dimensional directions, and its accompanied vertically displaceable microscope can aim the object accurately on its focus for performing precise measurement.

It is another object of the present invention to provide an innovative micrometric measuring instrument capable of performing measurement work accurately and efficiently without tiresome manually repeated try and error procedure for focusing the object.

To achieve the above-mentioned objects, the micrometric measuring instrument according to the present invention consists of a base, a flat entrainer, a microscope, and a display screen with its frame all conjoined firmly one another as a cluster unit. The flat entrainer is shiftable two dimensionally in X and Y directions and a rotatable loading disc for loading the object is able to make 360° rotation along with the object so as to facilitate the object to be observed from various directions The microscope is vertically displaceable thereby the object can be aimed and focused accurately for precise measurement. Moreover, two laser guides are provided for positioning the object rapidly and accurately to upgrade the measured data.

For fuller understanding of the nature and objects of the invention, reference should be made to the following detailed description taken in conjunction with the accompanying drawings.

### BRIEF DESCRIPTION OF THE DRAWINGS

Fig. 1A is a three dimensional assembly view of the micrometric measuring instrument according to the present invention;
Fig. 2 is a schematic illustrative view of the present invention;
Fig. 3 is a three-dimensional exploded view showing the loading disc and its associated components according to the present invention;
Fig. 4 is a three-dimensional assembly view showing the loading disc according to the present invention; and
Fig. 5 is a side view showing the profile of the measuring instrument according to the present invention.

### DETAILED DESCRIPTION OF THE PREFERRED EMBODIMENT

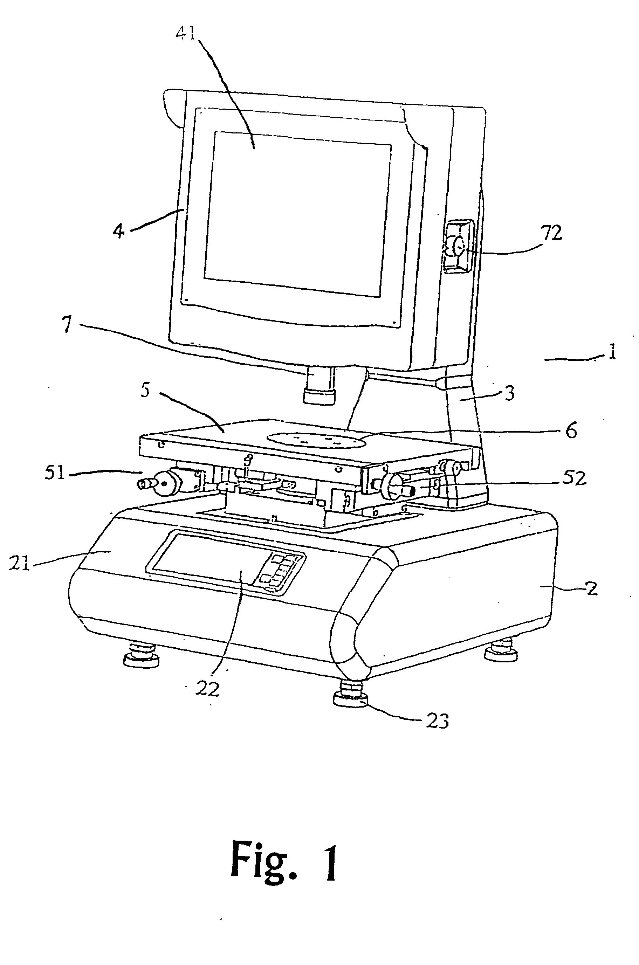

Referring to Fig. 1, the micrometric measuring instrument of the present invention comprises a main body 1, a base 2 under the main body 1, a sustention post 3 vertically erected from the rear part of the base 2, and a screen frame 4 sustained at the front portion of the sustention post 3. The base 2 having an accommodation cavity inside is made of a metallic substance of sufficient strength to support the whole unit securely. The front surface of the base 2 is formed into a slanted panel board 21 with a data display window 22 fitted therein. The base 2 is supported by four legs 23 provided at its four legs 23 provided at its four corners. A flat entrainer 5 sustained on the base 2 is equipped wit an X shift control 51 and a Y shift control 52 respectively at its two sides thereof such that 360° rotatable loading disc 6 is provided on the center portion of the flat entrainer 5 and turns along with the object thereon during measurement work.

A vertically displaceable microscope 7 is fixed in the screen frame 4, at a prescribed height above the loading disc 6 to display the image of the object on the screen 41.

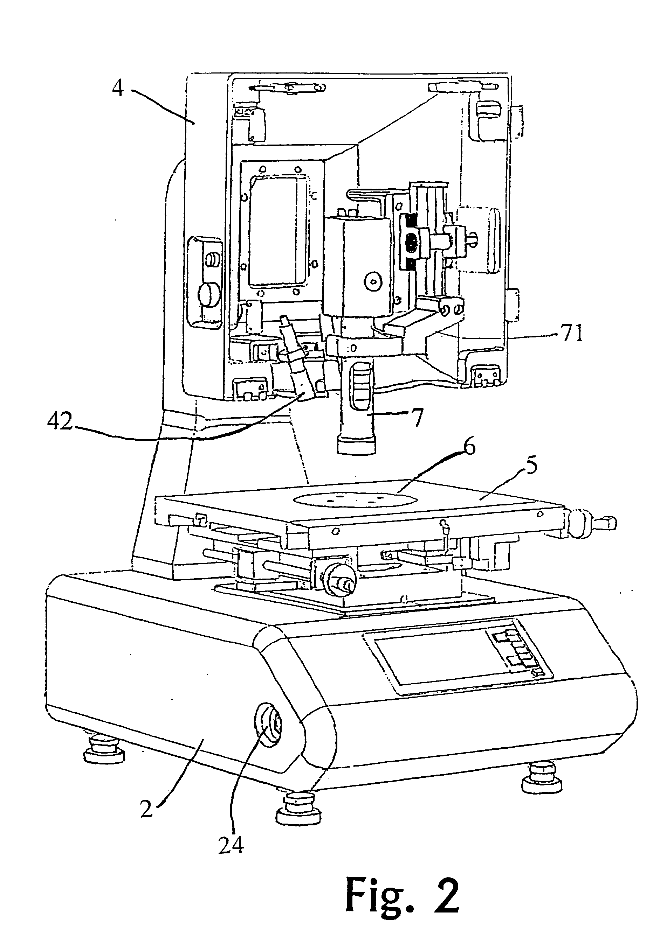

Referring to Fig. 2, as shown in Fig. 2, there is a power switch 24 installed at one side of the base 2. The vertical up and down motion of the microscope 7 is carried out by a vertical position adjuster 71 installed beneath the microscope 7, and the adjustment is made by turning a control button 72 provided at one side of the screen frame 4. Moreover, there is a slantly disposed first laser guide 42 inside the screen frame 4 near the microscope 7 for emitting the laser beam to assist the microscope operator for locating the object set at the desired position for performing measurement as soon as possible.

Since the structure of the vertical position adjuster 71 does not belong to inventive kernel of the present invention, its detailed description will be omitted herein.

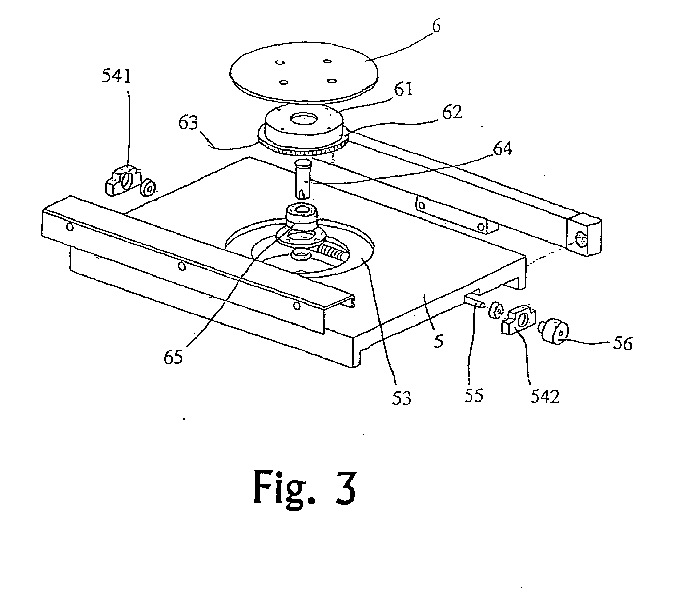

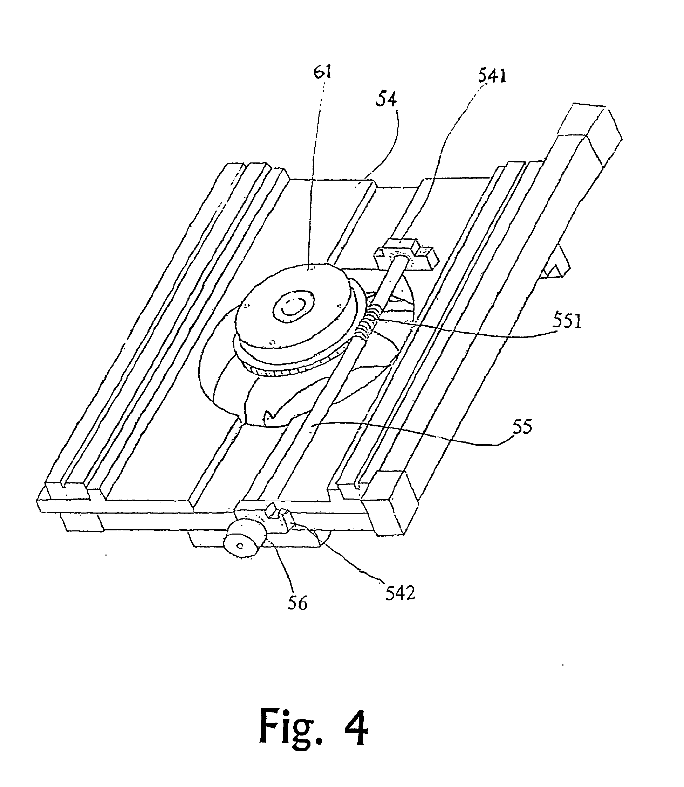

For the detail construction of the loading disc 6, reference should be made to Figs. 3 and 4, it is seen that a through hole 53 is opened at the center position on the flat entrainer 5 and then the loading disc 6 is inlaid therein so as to keep both the entrainer 5 and loading disc 6 at the same horizontal level. The loading disc 6 is engaged with a cylindrical block 61 beneath, and the bottom portion of the cylindrical block 61 is formed into a serrated flange 62 with a plurality of edge teeth 63 all around. A pin 64 having a bearing 65 at its lower end is passing through the center hole of the cylindrical block 61, causing the loading disc 6 to be rotatable horizontally. In addition, there is a pad platform 54 provided under the flat entrainer 5 at a horizontal level slightly below that of the serrated flange 62. A worm shaft 55 is laid in the direction horizontal tangent to the serrated flange 62 and its supported with two shaft supporters 541 and 542 at two ends. The serrated flange 62 and the worm shaft 55 are combined to form a worm gear unit by meshing threads 551 of the worm shaft 55 with the edge teeth 63 of the serrated flange 62. With this structure, the loading disc 6 can be rotated 360° through turning a knob 56 provided at one end of the worm shaft 55 so that the object can be observe from any angle.

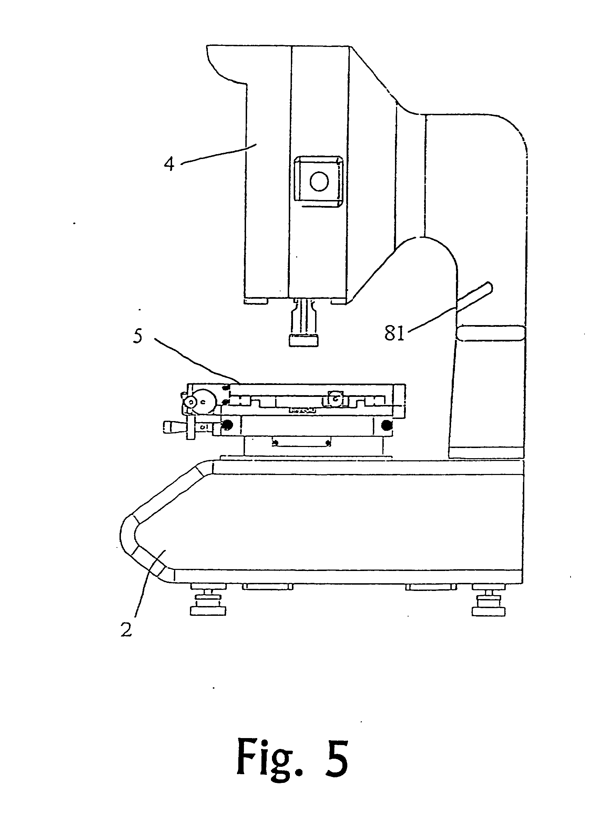

Referring to Fig. 5, there is a forwardly slanted second laser guide 81 equipped on the sustention post 3 aiming towards the entrainer 5. The focus of the microscope 7 falls on the intersection of the laser lights emitted from the two laser guide 42 and 81. By so the focusing of the object can be easily and rapidly carried out.

It shows from the above description that the present invention is able to eliminate the shortcomings existing in conventional micrometric measuring instrument by dexterously designed gang and clustered construction of a base, a flat entrainer, a microscope and a screen together, instead of a loosely and separately construction of the necessary components seen in conventional instruments. In addition to such an innovative structure, by means of up and down displacement of the microscope and 360° horizontally rotatable loading disc aided by two laser guides, the focusing of the object can be rapidly carried out and the measurement is then worked out efficiently with upgraded working quality.

Although the invention has been described in terms of a preferred embodiment, it is apparent that numerous variations and modifications may be made without departing from the true spirit and scope thereof, as set forth in th following claims.

## Claims

1. An innovative micrometric measuring instrument comprising a main body, a base, a flat entrainer, a vertically displaceable microscope, and a display screen with its frame, wherein said base has an accommodation cavity inside and is made of a metal substance to support weight of the whole instrument unit, said flat, entrainer is sustained on said base and are equipped wit an X shift control and a Y shift control respectively at each side thereof, said display screen with its frame is sustained by a sustention post vertically erected from the rear part of said base;
Said base, said screen frame, and said sustention post are firmly engaged by welding or with screws forming in a gang and cluster structure, an open hole is formed at the center of said flat entrainer and a loading disc is inlaid therein so as to keep the surfaces of both said entrainer and said loading disc at the same horizontal plane, said loading disc is engaged with a cylindrical block underneath, the bottom portion of said block is formed into a serrated flange with a plurality of edge teeth all around, a pin having a bearing at its lower end is passing through the center hole of said block causing said loading disc to be rotatable horizontally, a worm shaft is laid in the tangential direction on the same plane to said serrated flange thus working as a worm gear unit with said serrated flange by meshing its threads with the edge teeth of said serrated flange, with this structure said loading disc can be rotated 360° through turning a knob provided at one end of said worm shaft such that the object on said loading disc can be observed from various directions.

2. The instrument of claim 1, wherein a first laser guide is slantly disposed in said screen frame near said microscope side for emitting the laser beam to assist locating the object set at the desired position for performing measurement efficiently.

3. The instrument of claim 2, wherein a second laser guide is equipped on the sustention post as an auxiliary laser guide to said first one for locating the object.
